Europäisches Patentamt

European Patent Office

Office européen des brevets

(19)

(11) Numéro de publication : **0 246 950 B1**

(12) **FASCICULE DE BREVET EUROPEEN**

(45) Date de publication du fascicule du brevet :
26.06.91 Bulletin 91/26

(51) Int. Cl.⁵ : **C04B 35/46, H01G 4/12, H01B 3/12**

(21) Numéro de dépôt : **87401047.3**

(22) Date de dépôt : **07.05.87**

(54) Composition diélectrique de type I à base de titanate de néodyme.

(30) Priorité : **23.05.86 FR 8607384**

(43) Date de publication de la demande :
**25.11.87 Bulletin 87/48**

(45) Mention de la délivrance du brevet :
**26.06.91 Bulletin 91/26**

(84) Etats contractants désignés :
**DE FR GB IT**

(56) Documents cités :
**DE-A- 3 213 148**
**FR-A- 2 505 321**
**GB-A- 2 129 789**
**US-A- 3 988 498**

(56) Documents cités :
**CHEMICAL ABSTRACTS, vol. 103, no. 2, juillet 1985, page 256, abrégé no. 10294h, Columbus, Ohio, US; D. LEPKOVA et al.: "Ceramic dielectrics with a baking temperature below 1100 C.", & GOD. VISSH. KHIM.-TEKHNOL. INST., SOFIA 1983 (Pub. 1984), 29(1), 371-5**
**CHEMICAL ABSTRACTS, vol. 85, no. 12, septembre 1976, page 572, abrégé no. 86228v, Columbus, Ohio, US; & JP-A-76 35 099 (MURATA MFG. CO., LTD.) 25-03-1976**

(73) Titulaire : **COMPAGNIE EUROPEENNE DE COMPOSANTS ELECTRONIQUES LCC**
**50, rue Jean-Pierre Timbaud**
**F-92400 Courbevoie (FR)**

(72) Inventeur : **Rossello, Alain**
**THOMSON-CSF SCPI 19, avenue de Messine**
**F-75008 Paris (FR)**
Inventeur : **Schneider, Claude**
**THOMSON-CSF SCPI 19, avenue de Messine**
**F-75008 Paris (FR)**

(74) Mandataire : **Ruellan-Lemonnier, Brigitte et al**
**THOMSON-CSF SCPI**
**F-92045 PARIS LA DEFENSE CEDEX 67 (FR)**

EP 0 246 950 B1

## Description

La présente invention concerne des compositions diélectriques de type I frittant à basse température, plus particulièrement des compositions diélectriques de type I à base de titanate de néodyme.

Les compositions diélectriques présentant des propriétés intéressantes pour la réalisation de condensateurs ont été classées en fonction de différents critères tels que leur coefficient de température défini comme étant le produit de la variation relative de capacité par l'inverse de la variation en température $\alpha = \Delta C/C.I/ \Delta Ti$ et leur constante diélectrique. Ainsi, les compositions diélectriques de type I sont celles présentant une faible constante diélectrique comprise notamment entre 10 et 90.

Il est connu de réaliser des compositions diélectriques de type I présentant notamment un coefficient de température de la constante diélectrique pratiquement nul dans une large gamme de température ainsi que de très faibles pertes diélectriques (en général inférieures à $5.10^{-4}$) sous des fréquences élevées supérieures à 1 MHz et sur une large gamme de température comprise entre −55°C et +125°C, en utilisant entre autres du titanate de baryum et du titanate de néodyme. Ce type de composition est en général utilisé pour réaliser des condensateurs céramique soit sous forme de disque, soit sous forme multicouche. Or, les condensateurs céramique multicouches sont en général fabriqués en coulant ou en formant des couches de diélectrique, en déposant des électrodes métalliques conductrices sur les couches isolantes, en empilant les éléments en résultant pour former un condensateur multicouche et en frittant le matériau à température élevée pour le densifier et former une structure solide.

On connaît, par DE-A-3 213 148, une composition céramique frittant à basse température (entre 1050 et 1100°C), à base de titanate de néodyme et comprenant, entre autres, de l'oxyde de bismuth.

Toutefois, les compositions diélectriques de type I utilisées nécessitent pour le frittage final, une température généralement comprise entre 1300°C et 1500°C. Du fait de cette temperature élevée, les fours utilisés pour le frittage sont donc onéreux. D'autre part, cette température interdit l'utilisation de certains alliages pour constituer les électrodes métalliques. Il est donc nécessaire de recourir à des métaux très onéreux tels que le palladium qui résiste aux hautes températures.

La présente invention a donc pour but de remédier à ces inconvénients en proposant une nouvelle composition diélectrique de type I à base de titanate de néodyme qui permet un frittage inférieur à 1200°C tout en conservant les performances des condensateurs ainsi obtenus.

En conséquence, la présente invention a pour objet une composition disélectrique de type I à base de titanate de néodyme frittant à basse température, constituée d'un mélange comportant du titanate de nésodyme, du titanate de baryum et de l'oxyde de zinc, caractérisée en ce qu'elle comporte 58 à 70% en poids de titanate de néodyme $(Nd_2O_3\text{-}3TiO_2)$, 12 à 20% en poids de titanate de plomb $(PbTiO_3)$, 5 à 14% en poids de titanate de baryum $(BaTiO_3)$, 3 à 10% en poids de fondant à base d'oxyde de plomb, de silice, d'oxyde de bore, 0,3 à 5% en poids d'oxyde de zinc (ZnO), 0,1 à 1,5% en poids d'oxyde d'yttrium, la composition ne comportant pas d'oxyde de bismut.

Ainsi, la présente invention consiste à ajouter, à des compositions diélectriques à base d'un diagramme connu, des fondants spécifiques et de l'oxyde de zinc, ce qui conduit à la diminution de la température de frittage qui est alors avantageusement proche de 1100°C.

D'autre part, les compositions ci-dessus, non seulement présentent une température de frittage abaissée par rapport aux températures de frittage habituelles des compositions à base de titanate de néodyme, mais ces compositions présentent de faibles pertes diélectriques sous des fréquences élevées supérieures à 1 MHz et ce sur une large gamme de température comprise notamment entre −55°C et +125°C. Ce résultat est tout à fait surprenant et semble être dû à la composition spécifique du fondant qui, à l'inverse des fondants de type connu, ne comporte pas de bismuth et à la présence d'oxyde d'yttrium.

Selon un mode de réalisation préférentiel, le fondant ou fritte de verre comporte 74% en poids d'oxyde de plomb, 16,9% en poids de silice, 9% en poids d'oxyde de bore et 0,1% en poids d'alumine. D'autre part, la composition comportera de préférence 3,6% en poids d'oxyde de zinc et 0,9% en poids d'oxyde d'yttrium.

Selon une autre caractéristique de la présente invention, la composition diélectrique comporte de plus entre 0 et 20% de zirconate de baryum $(BaZrO_3)$. L'adjonction de zirconate de baryum permet de modifier le coefficient de température et, en conséquence, d'étendre la gamme des compositions aux diélectriques à coefficient de température compris entre 0 et −750 ppm tout en conservant l'ensemble des propriétés électriques décrites précédemment.

L'invention sera mieux comprise à l'aide des exemples de réalisation suivants, donnés à titre non limitatif.

<u>Exemple 1 :</u>

Les différentes compositions sont préparées de manière classique pour l'homme de l'art.

On prépare tout d'abord le fondant par fusion dans un creuset de l'oxyde de plomb, de l'oxyde de bore et de la silice mélangés et broyés. On trempe ensuite le liquide dans l'eau et on broie la fritte de verre obtenue.

Ensuite, on mélange dans des récipients en polyéthylène contenant 200 g de billes de zircone, 100 cc d'eau désionisée, et une quantité de poudre variant entre 50 et 60 g ayant la composition suivante : (les pourcentages étant donnés en poids)

| | |
|---|---|
| $Nd_2O_3 - 3 TiO_2$ | 61 % |
| $PbTiO_3$ | 14,79 % |
| $BaTiO_3$ | 11,09 % |
| Fondant à base de plomb, silice, bore | 8,5 % |
| Oxyde d'yttrium | 0,92 % |
| Oxyde de zinc | 3,7 % |

L'ensemble des constituants est mélangé pendant deux heures. La barbotine obtenue, après incorporation d'un liant, est séchée et la poudre tamisée.

Des disques d'épaisseur 1 mm et de diamètre 8,4 mm sont pressés.

Le frittage est conduit dans un four en atmosphère oxydante, à des températures comprises entre 1110°C et 1170°C et plus précisément à 1130°C.

Après dépôt d'électrodes en argent sur les deux faces, les condensateurs sont testés électriquement et les résultats sont mentionnés ci-après :

| | |
|---|---|
| Constante diélectrique à 20°C (1MHz) | 71 |
| Perte diélectrique à 20°C($10^{-4}$)(1MHz) | 6 |
| $K \, \& \, 10^{-6}$ | 0 |
| Densité de la céramique | 5,4 |

On peut constater que le diélectrique selon l'invention ainsi que les condensateurs réalisés à partir de ce diélectrique possèdent de bonnes propriétés et correspondent un particulier à une classe NPO. Or, il est particulièrement remarquable d'obtenir de telles propriétés notamment au niveau des pertes diélectriques lorsqu'on ajoute une fritte de verre à un diélectrique de type 1 contenant du titanate de néodyme.

Exemple 2 :

On prépare dans les mêmes conditions que précédemment trois mélanges contenant 52 g de poudre dont les proportions sont données dans le tableau ci-après.

Les proportions de la fritte de verre et de l'oxyde de zinc varient respectivement de 8,74% à 7,73% et de 3,8% a 3,36%. Les propriétés électriques sont quelque peu modifiées, surtout au niveau du coefficient de température.

Tableau 1

| Nd$_2$O$_3$ - 3TiO$_2$ | 62,73 % | 63,25 % | 63,78 % |
|---|---|---|---|
| BaTiO$_3$ | 8,555 % | 8,625 % | 8,69 % |
| PbTiO$_3$ | 15,21 % | 15,33 % | 15,46 % |
| Fondant | 8,745 % | 8,242 % | 7,73 % |
| Y$_2$O$_3$ | 0,95 % | 0,96 % | 0,966 % |
| ZnO | 3,8 % | 3,584 % | 3,36 % |
| Constante diélectrique à 20°C (1MHz) | 68,4 | 68 | 71 |
| Perte diélectrique à 20°C (1MHz) | 6 10$^{-4}$ | 7 10$^{-4}$ | 6 10$^{-4}$ |
| K $\sigma$ 10$^{-6}$ | +4 ppm | +8,5 ppm | 0 ppm |
| d(g/cm$^3$) | 5,3 | 5,4 | 5,3 |

(les pourcentages donnés sont des pourcentages en poids et sont donnés à ± 0,2%))

Exemple 3 :

On prépare trois mélanges contenant 52 g de poudre dont les proportions sont données au tableau 2 ci-après.

La proportion de titanate de baryum varie de 8,5% à 14,3% (les pourcentages indiqués sont des pourcentages en poids).

Le coefficient de température est également modifié en fonction du taux de titanate de baryum.

Tableau 2

| Nd$_2$O$_3$ - 3TiO$_2$ | 62,73 % | 61 % | 58,82 % |
|---|---|---|---|
| BaTiO$_3$ | 8,555 % | 11,09 % | 14,26 % |
| PbTiO$_3$ | 15,21 % | 14,78 % | 14,26 % |
| Fondant | 8,745 % | 8,5 % | 8,2 % |
| Oxyde d'yttrium | 0,95 % | 0,92 % | 0,89 % |
| Oxyde de zinc | 3,8 % | 3,7 % | 3,565 % |
| Constante diélectrique a 20°C (1MHz) | 67,4 | 73,4 | 73 |
| Perte diélectrique à 20°C (1MHz) | 5 10$^{-4}$ | 5 10$^{-4}$ | 7 10$^{-4}$ |
| K $\sigma$ 10$^{-6}$ | +8,8 ppm | +4 ppm | +12,6 ppm |
| d(g/cm$^3$) | 5,4 | 5,4 | 5,5 |

Exemple 4 :

On prépare un mélange contenant 52 g de poudre dont les proportions sont données au tableau 3 ci-après.

La caractéristique principale est l'ajout de zirconate de baryum, qui permet une modification du coefficient de température.

4

**Tableau 3**

| | |
|---|---|
| $Nd_2O_3 - 3TiO_2$ | 58,252 |
| $BaTiO_3$ | 7,943 |
| $PbTiO_3$ | 14,122 |
| Fondant | 9,09 |
| Oxyde d'yttrium | 0,8826 |
| Oxyde de zinc | 0 |
| $BaZrO_3$ | 9,708 % |
| Constante diélectrique à 20°C (1MHz) | 42 |
| Perte diélectrique à 20°C (1MHz) | $5\ 10^{-4}$ |
| $K\ \sigma 10^{-6}$ | - 75 ppm |
| $d(g/cm^3)$ | 4,2 |

**Revendications**

1. Une composition diélectrique de type I à base de titanate de néodyme frittant à basse température, constituée d'un mélange comportant du titanate de néodyme, du titanate de baryum et de l'oxyde de zinc, caractérisée en ce qu'elle comprend 58 à 70% en poids de titanate de néodyme ($Nd_2O_3$- $3TiO_2$), 12 à 20% en poids de titanate de plomb ($PbTiO_3$), 5 à 14% en poids de titanate de baryum ($BaTiO_3$), 3 à 10% en poids de fritte de verre à base d'oxyde de plomb, de silice et d'oxyde de bore, 0,3 à 5% en poids d'oxyde de zinc (ZnO), 0,1 à 1,5% en poids d'oxyde d'yttrium, la composition ne comportant pas d'oxyde de bismuth.

2. Une composition diélectrique selon la revendication 1 caractérisée en ce que la fritte de verre comporte 74% en poids d'oxyde de plomb, 16,9% en poids de silice, 9% en poids d'oxyde de bore et 0,1% en poids d'alumine.

3. Une composition céramique diélectrique selon l'une quelconque des revendications 1 et 2, caractérisée en ce qu'elle comporte de plus 0 à 20% en poids de zirconate de baryum.

4. Une composition céramique selon l'une quelconque des revendications 1 à 3, caractérisée en ce qu'elle comporte 3,6% en poids d'oxyde de zinc.

5. Une composition diélectrique selon l'une quelconque des revendications 1 à 4, caractérisée en ce qu'elle comporte 0,9% en poids d'oxyde d'yttrium.

**Claims**

1. A dielectric composition of the type I based on neodymium titanate, able to be sintered at a low temperature and in the form of a mixture of neodymium titanate, barium titanate and zinc oxide, characterized in that it comprises 58 to 70% by weight of neodymium titanate ($Nd_2O_3 3TiO_2$), 12 to 20% by weight of lead titanate ($PbTiO_3$), 5 to 14% by weight of barium titanate ($BaTiO_3$), 3 to 10% by weight of sintered glass containing lead oxide, silica and boron oxide, 0.3 to 5% by weight of zinc oxide (ZnO) and 0.1 to 1.5% by weight of yttrium oxide, said composition being free of bismuth oxide.

2. The dielectric composition as claimed in claim 1, characterized in that the sintered glass comprises 74% by weight of lead oxide, 16.9% by weight of silica, 9% by weight of boron and 0.1 % by weight of aluminum.

3. The dielectric composition as claimed in claim 1 or claim 2, characterized in that it furthermore comprises 0 to 20% of barium zirconate.

4. A ceramic dielectric composition as claimed in any one of the preceding claims 1 through 3, characterized in that it comprises 3.6% by weight of zinc oxide.

5

5. The composition as claimed in any one of the preceding claims 1 through 4, characterized in that it comprises 0.9% by weight of yttrium oxide.

**Ansprüche**

1. Dielektrische Zusammensetzung des Typs I auf Neodym-Titanat-Basis, die bei niedriger Temperatur sintert und aus einem Gemisch besteht, das Neodym-Titanat, Barium-Titanat sowie Zinkoxid enthält, dadurch gekennzeichnet, daß sie 58 bis 70 Gew% Neodym-Titanat ($Nd_2O_3 \cdot 3TiO_2$), 12 bis 20 Gew% Blei-Titanat ($PbTiO_3$), 5 bis 14 Gew% Barium-Titanat (BaTiO3), 3 bis 10 Gew% Glasfritte auf Bleioxid-, Silizium- und Bor-Basis, 0,3 bis 5 Gew% Zinkoxid (ZnO) und 0,1 bis 1,5% Yttriumoxid umfaßt, wobei die Zusammensetzung kein Wismutoxid enthält.

2. Dielektrische Zusammensetzung nach Anspruch 1, dadurch gekennzeichnet, daß die Glasfritte 74 Gew% Bleioxid, 16,9 Gew% Siliziumoxid, 9 Gew% Boroxid sowie 0,1 Gew% Aluminiumoxid enthält.

3. Dielektrische Keramik-Zusammensetzung nach Anspruch 1 und 2, dadurch gekennzeichnet, daß sie ferner 0 bis 20 Gew% Bariumzirkonat enthält.

4. Keramik-Zusammensetzung nach einem der Ansprüche 1 bis 3, dadurch gekennzeichnet, daß sie 3,6 Gew% Zinkoxid enthält.

5. Dielektrische Zusammensetzung nach einem der Ansprüche 1 bis 4, dadurch gekennzeichnet, daß sie 0,9 Gew% Yttriumoxid enthält.